# EUROPÄISCHE PATENTSCHRIFT

(11) **EP 1 211 004 B1**
(45) Veröffentlichungstag und Bekanntmachung des Hinweises auf die Patenterteilung: **17.05.2006**
(21) Anmeldenummer: 01118473.6
(22) Anmeldetag: 01.08.2001
(51) Int. Cl.: B23B 29/04

(54) **Spannvorrichtung für einen Hohlschaft**
Clamping mechanism for a hollow shank
Dispositif de serrage pour un arbre creux

(30) Priorität: 29.11.2000 DE 10059209
(43) Veröffentlichungstag der Anmeldung: 05.06.2002
(73) Patentinhaber: Röhm GmbH, 89567 Sontheim (DE)
(72) Erfinder: Röhm, Günter Horst, D 89567 Sontheim (DE)
(74) Vertreter: Hentrich, Swen

(56) Entgegenhaltungen:
- EP-A- 0 387 228
- DE-A- 4 138 974
- DE-C- 3 706 534
- DE-U- 8 903 407

## Beschreibung

Die Erfindung betrifft eine Spannvorrichtung zur lösbaren Kupplung eines einen Hohlschaft mit einer Hohlschaftaufnahme aufweisenden Werkzeugs, Werkstücks oder dergl. mit der Arbeitsspindel einer Werkzeugmaschine, wobei der Hohlschaft in der Hohlschaftaufnahme geneigt verlaufende Spannschrägen aufweist, an denen zur Erzeugung einer Anpreßkraft zwischen dem Hohlschaft und der Arbeitsspindel durch einen axial verschieblichen, in der Arbeitsspindel geführten Spannkopf betätigbare, an der Arbeitsspindel gelagerte Spannklauen mit korrespondierend geneigten Schrägflächen zur Anlage bringbar sind, wobei an dem Spannkopf zur Ausbildung eines Keilgetriebes eine mit dem die Schrägfläche aufweisenden Klauenkopf jeder Spannklaue zusammenwirkende Kegelfläche ausgebildet ist.

Eine derartige Spannvorrichtung ist aus der DE 41 38 974 A1 bekannt, bei der die Spannklauen durch eine über eine Zugstange vermittelte axiale Verstellung des Spannkopfes aus einer Position, in der sie außer Eingriff mit dem Hohlschaft sind, in eine Position verstellt werden, in der die Spannklauen in Eingriff mit dem Hohlschaft sind, der üblicherweise mittels einer Ladeeinrichtung der Spannvorrichtung zugeführt wird. Die langerstreckten, nur einseitig an der Arbeitsspindel gelagerten Spannklauen weisen ein Spiel auf, das dem freien Ende nicht exakt radial erfolgende Bewegungen mit seitlichen Bewegungskomponenten ermöglicht, so daß eine exakt gleichmäßige Verteilung der Spannklauen an ihrem freien Ende in Umfangsrichtung nicht gegeben ist. Dies führt zu einer Unwucht, die bei konventionellen Werkzeugmaschinen unproblematisch ist, sich aber bei modernen, mit Drehzahlen bis zu 40.000 Umdrehungen pro Minute arbeitenden Werkzeugmaschinen nachteilig auswirkt.

Der Erfindung liegt daher die Aufgabe zugrunde, eine Spannvorrichtung der eingangs genannten Art so auszubilden, daß eine sich beim Spannvorgang ergebende Unwucht vermieden wird.

Diese Aufgabe wird nach der Erfindung bei einer Spannvorrichtung der eingangs genannten Art dadurch gelöst, daß die am Spannkopf ausgebildete Kegelfläche durch gleichmäßig über den Umfang verteilt angeordnete erste Planflächen modifiziert ist, die zur Zusammenwirkung mit planen Anlagefläche vorgesehen sind, die an den Klauenköpfen ausgebildet sind.

Die Anlage der Klauenköpfe mit ihrer Anlagefläche an den ersten Planflächen bietet den Vorteil, daß ein seitliches Ausweichen der Klauenköpfe und damit der Spannklauen insgesamt verhindert wird, weil angrenzend an die ersten Planflächen sich die Krümmung der Kegelfläche fortsetzt, die ersten Planflächen also Potentialmulden bilden, in die die Klauenköpfe bei der Verstellung des Spannkopfes hineingedrückt werden. Diese Ausführungsform bietet weiterhin den Vorteil, daß die einander anliegenden Berührungsflächen von dem Spannkopf und den Spannklauen über den gesamten Spannbereich einen gleichmäßigen Kontakt aufweisen, der anders als bei den Ausführungsformen mit gekrümmten Flächen, bei den sich die Krümmung der Kegelfläche in axialer Richtung verändert, nicht variiert.

Dieser Vorteil bietet sich auch beim Lösen des Eingriffs der Spannklauen in die Hohlschaftaufnahme, wenn jede Spannklaue an dem dem Klauenkopf abgewandten Ende einen in eine in Umfangsrichtung der Arbeitsspindel verlaufende Ringnut eingreifenden Klauenfuß aufweist, der zum Lösen der Spannung mit einer am Spannkopf ausgebildeten Stellfläche zusammenwirkt, die gleichmäßig um den Umfang verteilt angeordnete zweite Planflächen aufweist, die zur Zusammenwirkung mit planen Kontaktflächen am Klauenfuß vorgesehen sind. Dazu ist weiterhin vorgesehen, daß an dem Klauenfuß ein zum Spannkopf weisender Wulst ausgebildet ist zur Zusammenwirkung mit einem an der Stellfläche des Spannkopfs ausgebildeten Ringbund mit in axialer Richtung konstantem Durchmesser, und daß der Ringbund gleichmäßig um den Umfang verteilt angeordnete dritte Planflächen aufweist. Sowohl die zweiten Planflächen als auch die dritten Planflächen fördern zugleich das lagerichtige Zusammenwirken der Spannklauen mit dem Spannkopf unabhängig von dessen axialer Lage.

Eine bevorzugte Ausführungsform der Erfindung ist dadurch gekennzeichnet, daß die Spannklauen an ihren Klauenfüßen durch ein Federglied zu einer Segmentspannzange verbunden sind. Die Verbindung der Spannklauen zu einer Segmentspannzange vereinfacht die Handhabung bei der Montage und bei der Betätigung der Spannvorrichtung, da für die Montage die Spannklauen der Segmentspannzange lediglich unter Spannung des Federgliedes zusammengedrückt werden müssen und dann in die in Umfangsrichtung der Arbeitsspindel verlaufende Ringnut eingesetzt werden können, in der die Segmentspannzange sich durch das Federglied selbst sichert. Die einzelnen Spannklauen der Segmentspannzange können sich aufgrund des Federgliedes selber untereinander ausrichten, was zwar auch mit einem seitlichen Spiel der Klauenfüße verbunden ist. Dies ist aber hinsichtlich einer Unwucht unkritisch, da aufgrund der ersten, zweiten und dritten Planflächen sich die Verteilung der Spannklauen in Umfangsrichtung ausgleicht.

Aus fertigungstechnischen Gründen ist es bevorzugt, wenn das Federglied durch einen gummielastischen Ring gebildet ist, der in einer am Klauenfuß in Umfangsrichtung verlaufenden Nut gehalten ist, in Umfangsrichtung in die zwischen den Spannklauen bestehenden Lücken eingreift und mit den Radialflächen der Klauenfüße verbunden ist.

Im folgenden wird die Erfindung an in der Zeichnung dargestellten Ausführungsbeispielen näher erläutert; es zeigen:
- Fig. 1: einen Längsschnitt durch das einen Hohlschaft haltende axiale Ende einer Spannvorrichtung, in der Spannstellung gezeigt,

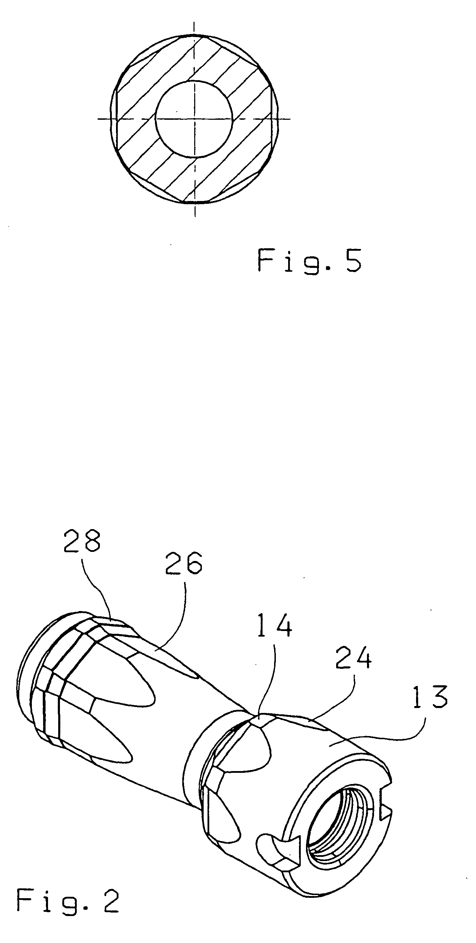

- Fig. 2: eine perspektivische Darstellung des die ersten, zweiten und dritten Planflächen aufweisenden Spannkopfes,

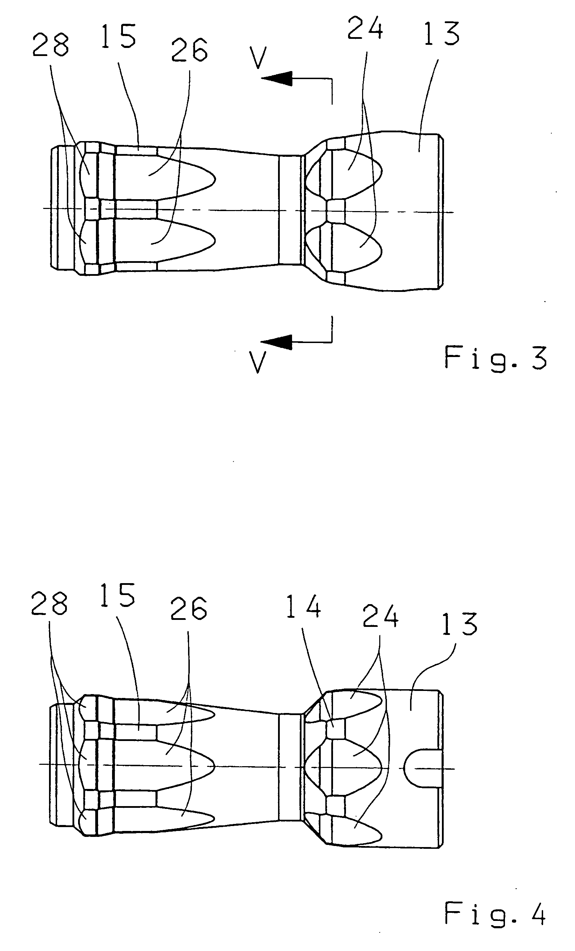

- Fig. 3: eine Seitenansicht des Spannkopf nach einer ersten Ausführungsform mit sechs um den Umfang verteilten ersten, zweiten und dritten Planflächen,
- Fig. 4: eine der Fig. 3 entsprechende Darstellung einer Ausführungsform mit sechs um den Umfang verteilten Planflächen,
- Fig. 5: den Schnitt V-V aus Figur 3,
- Fig. 6: eine perspektivische Darstellung von zu einer Segmentspannzange zusammengefaßten Spannklauen,
- Fig. 7: eine Seitenansicht der Segmentspannzange aus Figur 6,
- Fig. 8: einen Längsschnitt durch die Segmentspannzange aus Figur 6,
- Fig. 9: eine Draufsicht auf die Segmentspannzange aus Figur 6,
- Fig. 10: den Schnitt X-X aus Figur 1, ohne Werkzeug dargestellt, und

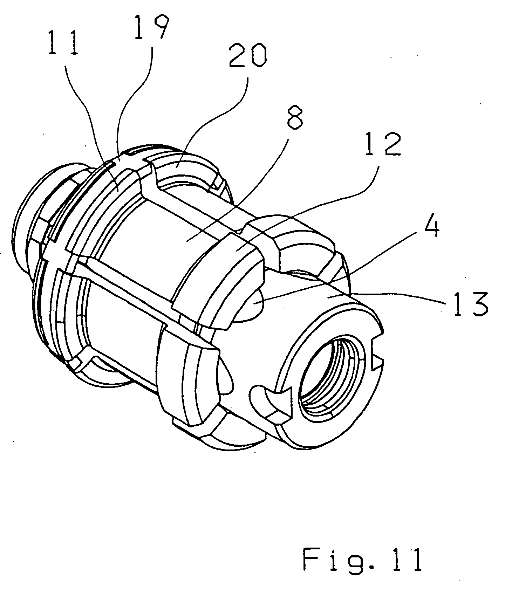

- Fig. 11: eine perspektivische Darstellung der den Spannkopf umfassenden Segmentspannzange.

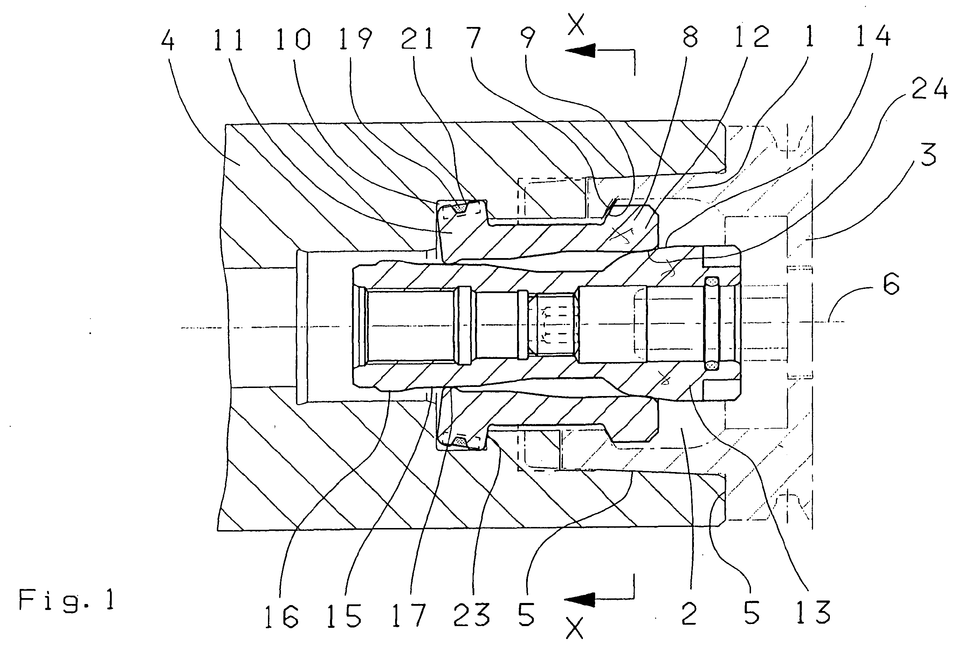

In Figur 1 ist eine Spannvorrichtung gezeigt zur lösbaren Kupplung eines einen Hohlschaft 1 mit einer Hohlschaftaufnahme 2 aufweisenden Werkstücks 3 mit der Arbeitsspindel 4 einer Werkzeugmaschine. Zwischen dem Hohlschaft 1 und der Arbeitsspindel 4 sind Planflächen 5 ausgebildet, und zwar radial gerichtete Planflächen 5 sowie aufgrund der Gestaltung des Hohlschaftes 1 als Hohlschaftkegel geneigt zur Längsachse 6 verlaufende Planflächen 5. Um den Hohlschaft 1 zum sicheren Spannen gegen diese Planflächen 5 pressen zu können, sind in der Hohlschaftaufnahme 2 geneigt verlaufende Spannschrägen 7 ausgebildet, an denen Spannklauen 8 mit korrespondierend geneigten Schrägflächen 9 zur Anlage gebracht werden können. Die Spannklauen 8 sind in einer in Umfangsrichtung der Arbeitsspindel 4 verlaufenden Ringnut 10 gelagert und erstrecken sich im wesentlichen in axialer Richtung parallel zur Längsachse 6 der Spannvorrichtung, wobei die Spannklauen 8 in die Ringnut 10 mit einem Klauenfuß 11 eingreifen und am entgegengesetzten freien Ende einen Klauenkopf 12 aufweisen, an dem die Schrägflächen 9 ausgebildet sind.

Zur Verstellung der Spannklauen 8 und damit zur Betätigung der Spannvorrichtung ist in der Arbeitsspindel 4 ein axial verschieblicher Spannkopf 13 geführt, der zur Ausbildung eines Keilgetriebes mit dem Klauenkopf 12 eine mit diesem zusammenwirkende Kegelfläche 14 sowie zum Lösen der Spannung eine an dem Klauenfuß 11 angeordnete Stellfläche 15 aufweist, an der ein Ringbund 16 mit axial konstantem Durchmesser ausgebildet ist, der mit einem am Klauenfuß 11 ausgebildeten Wulst 17 zusammenwirkt.

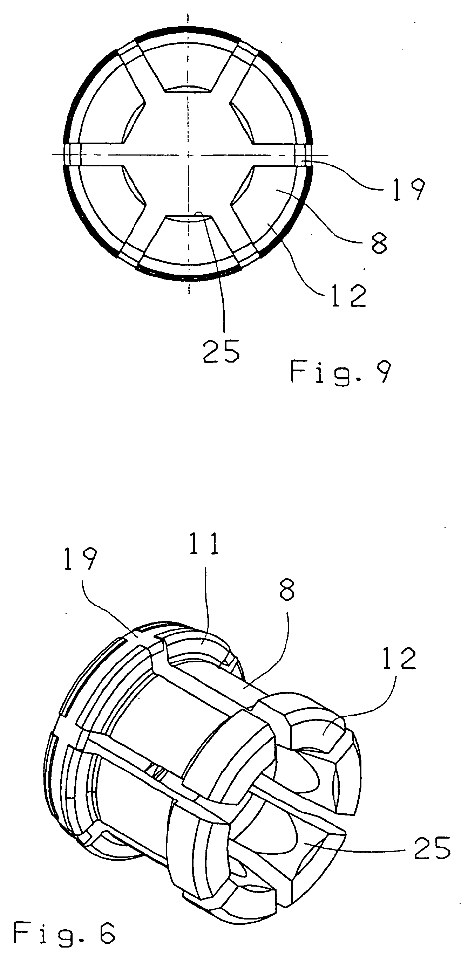

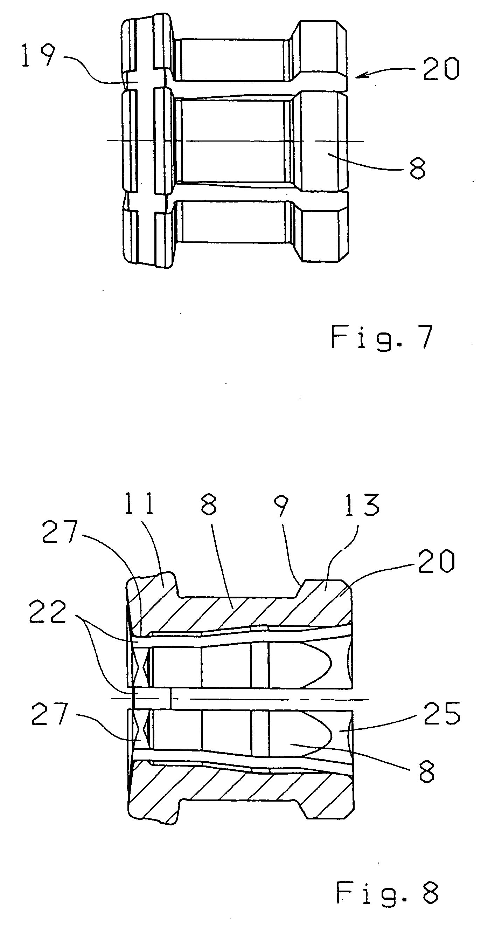

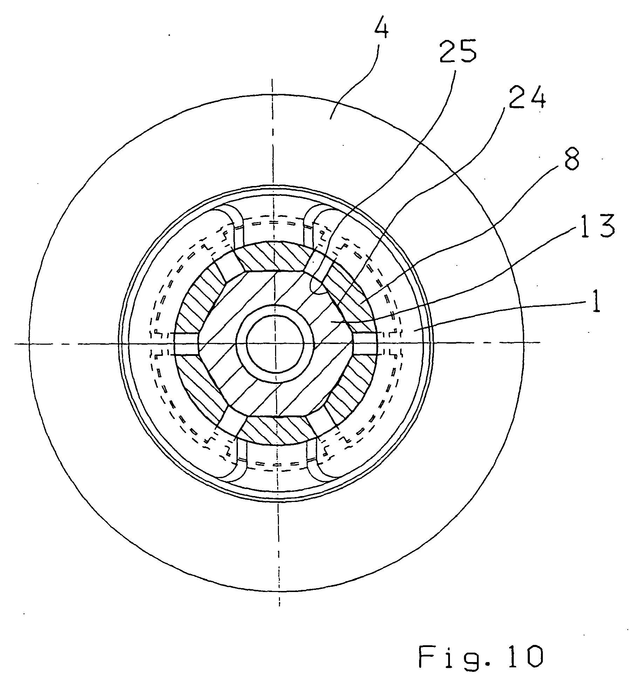

Wie insbesondere aus den Figuren 6 bis 9 ersichtlich ist, sind die Spannklauen 8 an ihren Klauenfüßen 11 durch ein Federglied 19 zu einer Segmentspannzange 20 verbunden, wobei das Federglied 19 in den dargestellten Ausführungsformen durch einen gummielastischen, an die Klauenfüße 11 vulkanisierten Ring gebildet ist, der in einer am Klauenfuß 11 in Umfangsrichtung verlaufenden Nut 21 gehalten ist, sich in Umfangsrichtung in die zwischen den Spannklauen 8 bestehenden Lücken 22 erstreckt und mit den Radialflächen der Klauenfüße 11 verbunden ist.

Die in der Arbeitsspindel 4 zur Aufnahme des Klauenfußes 11 ausgebildete Ringnut 10 weist eine Nutwand 23 auf, die sich bis zu ihrer halben Höhe vom Nutgrund rechtwinklig erstreckt und ab dieser Höhe mit einem Neigungswinkel von 10° zum Klauenkopf 12 neigt, damit dieser zum Einsetzen des Hohlschaftes 1 einen ausreichenden Fanghub aufweist.

Die Spannvorrichtung kann prinzipiell mit einer beliebigen geradzahligen oder ungeradzahligen Anzahl von Spannklauen 8 realisiert werden. Als günstig haben sich Ausführungsformen mit sechs oder sieben Spannklauen 8 herausgestellt.

Die am Spannkopf 13 ausgebildete Kegelfläche 14 ist durch gleichmäßig über den Umfang verteilt angeordnete erste Planflächen 24 modifiziert, die zur Zusammenwirkung mit planen Anlageflächen 25 vorgesehen sind, die an den Klauenköpfen 12 der Spannklauen 8 ausgebildet sind. Weiterhin weist auch die am Spannkopf 13 ausgebildete Stellfläche 15 gleichmäßig um den Umfang verteilt angeordnete zweite Planflächen26 auf, die mit planen Kontaktflächen 27 am Klauenfuß 11 zusammenwirken, die je nach Spannzustand und damit axialer Stellung des Spannkopfes 13 auch an dritten Planflächen 28, die gleichmäßig über den Umfang verteilt am Ringbund 16 ausgebildet sind, zur Anlage kommen.

## Patentansprüche

1. Spannvorrichtung zur lösbaren Kupplung eines einen Hohlschaft (1) mit einer Hohlschaftaufnahme (2) aufweisenden Werkzeugs, Werkstücks (3) oder dergl. mit der Arbeitsspindel (4) einer Werkzeugmaschine, wobei der Hohlschaft (1) in der Hohlschaftaufnahme (2) geneigt verlaufende Spannschrägen (7) aufweist, an denen zur Erzeugung einer Anpreßkraft zwischen dem Hohlschaft (1) und der Arbeitsspindel (4) durch einen axial verschieblichen, in der Arbeitsspindel (4) geführten Spannkopf (13) betätigbare, an der Arbeitsspindel (4) gelagerte Spannklauen (8) mit korrespondierend geneigten Schrägflächen (9) zur Anlage bringbar sind, wobei an dem Spannkopf (13) zur Ausbildung eines Keilgetriebes eine mit dem die Schrägfläche (9) aufweisenden Klauenkopf (12) jeder Spannklaue (8) zusammenwirkende Kegelfläche (14) ausgebildet ist, **dadurch gekennzeichnet, daß** die am Spannkopf (13) ausgebildete Kegelfläche (14) durch gleichmäßig über den Umfang verteilt angeordnete erste Planflächen (24) modifiziert ist, die zur Zusammenwirkung mit planen Anlagefläche (25) vorgesehen sind, die an den Klauenköpfen (12) ausgebildet sind.

2. Spannvorrichtung nach Anspruch 1, **dadurch gekennzeichnet, daß** jede Spannklaue (8) an dem dem Klauenkopf (12) abgewandten Ende einen in eine in Umfangsrichtung der Arbeitsspindel (4) verlaufende Ringnut (10) eingreifenden Klauenfuß (11) aufweist, der zum Lösen der Spannung mit einer am Spannkopf (13) ausgebildeten Stellfläche (15) zusammenwirkt, die gleichmäßig um den Umfang verteilt angeordnete zweite Planflächen (26) aufweist, die zur Zusammenwirkung mit planen Kontaktflächen (27) am Klauenfuß (11) vorgesehen sind.

3. Spannvorrichtung nach Anspruch 1 oder 2, **dadurch gekennzeichnet, daß** an dem Klauenfuß (11) ein zum Spannkopf (13) weisender Wulst (17) ausgebildet ist zur Zusammwirkung mit einem an der Stellfläche (15) des Spannkopfs (13) ausgebildeten Ringbund (16) mit in axialer Richtung konstantem Durchmesser, und daß der Ringbund (16) gleichmäßig um den Umfang verteilt angeordnete dritte Planflächen (28) aufweist.

4. Spannvorrichtung nach Anspruch 2 oder 3, **dadurch gekennzeichnet, daß** die Spannklauen (8) an ihren Klauenfüßen (11) durch ein Federglied (19) zu einer Segmentspannzange (20) verbunden sind.

5. Spannvorrichtung nach Anspruch 4, **dadurch gekennzeichnet, daß** das Federglied (19) durch einen gummielastischen Ring gebildet ist, der in einer am Klauenfuß (11) in Umfangsrichtung verlaufenden Nut (21) gehalten ist, in Umfangsrichtung in die zwischen den Spannklauen (8) bestehenden Lücken (22) eingreift und mit den Radialflächen der Klauenfüße (11) verbunden ist.

## Claims

1. A clamping apparatus for releasably coupling a tool, workpiece (3) or the like having a hollow shaft (1) with a hollow shaft receiving means (2), to the working spindle (4) of a machine tool, wherein the hollow shaft (1) has in the hollow shaft receiving means (2) slantingly extending inclined clamping faces (7) against which clamping claws (8) with correspondingly slanting inclined faces (9) which are mounted on the working spindle (4) and which are actuable by an axially displaceable clamping head (13) guided in the working spindle (4) can be caused to bear to produce a pressure force between the hollow shaft (1) and the working spindle (4), wherein provided on the clamping head (13) to provide a wedge actuating means is a taper surface (14) co-operating with the claw head (12) which has the inclined face (9), of each clamping claw (8), **characterised in that** the taper surface (14) on the clamping head (13) is modified by first flat faces (24) arranged distributed uniformly over the periphery and which are provided for co-operation with flat contact faces (25) which are provided on the claw heads (12).

2. A clamping apparatus according to claim 1 **characterised in that** each clamping claw (8) at the end remote from the claw head (12) has a claw foot (11) which engages into an annular groove (10) extending in the peripheral direction of the working spindle (4) and which for release of the clamping action co-operates with a control face (15) which is provided on the clamping head (13) and which has second flat faces (26) which are arranged distributed uniformly around the periphery and which are provided for co-operation with flat contact faces (27) on the claw foot (11).

3. A clamping apparatus according to claim 1 or claim 2 **characterised in that** a ridge (17) facing towards the clamping head (13) is provided on the claw foot (11) for co-operation with an annular collar (16) which is provided on the control face (15) of the clamping head (13) and which is of a constant diameter in the axial direction, and that the annular collar (16) has third flat faces (28) arranged distributed uniformly around the periphery.

4. A clamping apparatus according to claim 2 or claim 3 **characterised in that** the clamping claws (8) are connected at their claw feet (11) by a spring member (19) to form a segment collet chuck (20).

5. A clamping apparatus according to claim 4 **characterised in that** the spring member (19) is formed by a rubber-elastic ring which is held in a groove (21) extending in the peripheral direction on the claw foot (11), which engages in the peripheral direction into the gaps (22) between the clamping claws (8) and which is connected to the radial faces of the claw feet (11).

## Revendications

1. Dispositif de serrage pour l'accouplement libérable d'un outil, d'une pièce (3) ou d'un élément analogue, présentant une tige creuse (1) munie d'un logement (2) de tige creuse, avec la broche de travail (4) d'une machine-outil, la tige creuse (1) présentant, dans le logement (2) de tige creuse, des chanfreins de serrage (7) inclinés contre lesquels peuvent être amenées en prise, par des surfaces obliques (9) inclinées de façon correspondante, des griffes de serrage (8) montées sur la broche de travail (4) et pouvant être actionnées par une tête de serrage (13) axialement mobile, guidée dans la broche de travail (4), en vue de produire une force de serrage entre la tige creuse (1) et la broche de travail (4), une surface conique (14) étant aménagée sur la tête de serrage (13) pour réaliser un mécanisme à coinçage, ladite surface conique coopérant avec la tête de griffe (12), portant la surface oblique (9), de chaque griffe de serrage (8)), **caractérisé en ce que** la surface conique (14) aménagée sur la tête de serrage (13) est modifiée par des premières surfaces planes (24) qui sont uniformément réparties sur le pourtour et sont prévues pour coopérer avec des surfaces d'appui (25) planes aménagées sur les têtes de griffes (12).

2. Dispositif de serrage selon la revendication 1, **caractérisé en ce que** chaque griffe de serrage (8), à son extrémité éloignée de la tête de griffe (12), présente un pied de griffe (11) qui s'engage dans une gorge annulaire (10) s'étendant dans la direction périphérique de la broche de travail (4) et, pour libérer le serrage, coopère avec une surface de commande (15) aménagée sur la tête de serrage (13) et présentant des deuxièmes surfaces planes (26) qui sont uniformément réparties sur le pourtour et sont prévues pour coopérer avec des surfaces de contact (27) planes aménagées sur le pied de griffe (11).

3. Dispositif de serrage selon la revendication 1 ou 2, **caractérisé en ce qu'**un bourrelet (17) orienté en direction de la tête de serrage (13) est réalisé sur le pied de griffe (11), en vue de coopérer avec un collet annulaire (16) aménagé sur la surface de commande (15) de la tête de serrage (13) et présentant un diamètre constant dans la direction axiale, et **en ce que** le collet annulaire (16) présente des troisièmes surfaces planes (28) uniformément réparties sur le pourtour.

4. Dispositif de serrage selon la revendication 2 ou 3, **caractérisé en ce que** les griffes de serrage (8) sont reliées au niveau de leurs pieds de griffe (11) par un élément élastique (19) pour former une pince de serrage segmentée (20).

5. Dispositif de serrage selon la revendication 4, **caractérisé en ce que** l'élément élastique (19) est constitué d'une bague ayant l'élasticité du caoutchouc, qui est tenue dans une gorge (21) s'étendant dans la direction périphérique sur le pied de griffe (11), pénètre, dans la direction périphérique, dans les espaces (22) formés entre les griffes de serrage (8) et est reliée aux surfaces radiales des pieds de griffe (11).
